# EUROPEAN PATENT SPECIFICATION

(11) **EP 3 151 112 B1**
(45) Date of publication and mention of the grant of the patent: **03.07.2024**
(21) Application number: 16002037.6
(22) Date of filing: 20.09.2016
(51) Int. Cl.: G06F 9/451, G06F 40/143

(54) **OPTIMIZING SOFTWARE APPLICATION USER INTERFACE PERFORMANCE USING INTERFACE IMAGES**
OPTIMIERUNG DER LEISTUNG EINER SOFTWAREANWENDUNGSBENUTZEROBERFLÄCHE UNTER VERWENDUNG VON BILDERN
OPTIMISATION DE PERFORMANCE DE L'INTERFACE UTILISATEUR D'UNE APPLICATION LOGICIELLE À L'AIDE DES IMAGES D'INTERFACE

(30) Priority: 01.10.2015 US 201514872662
(43) Date of publication of application: 05.04.2017
(73) Proprietor: SAP SE, 69190 Walldorf (DE)
(72) Inventor: Kirtkow, Sergej, 69190 Walldorf (DE); Moser, Martin, 69190 Walldorf (DE)
(74) Representative: Müller-Boré & Partner Patentanwälte PartG mbB

(56) References cited:
- EP-A1- 1 069 500
- US-A1- 2002 083 132
- US-A1- 2013 046 815
- US-B1- 8 893 013

## Description

### BACKGROUND

In a client-server software application environment, a software application user interface (UI) typically suffers from poor performance, because either standard server-side or client-side rendering of the UI affects performance as a tradeoff for increased user experience. For example, in server-side rendering, images that are transmitted from a server to be displayed on a client require high network bandwidth, display artifacts due to image compression technologies used to reduce bandwidth requirements, and can cause network lag affecting interactivity. Server-side rendering offers a low-fidelity user experience, with highly interactive UIs almost unusable due to network lag. On the other hand, in client-side rendering, both data and detailed UI rendering instructions are transmitted from the server to the client. The client then interprets the rendering instructions and generates the UI. The down-side of the client-side rendering approach is the large amount of data that needs to be transferred to the client to implement the rendering of the UI, for example in the browser. Typically, either all required libraries are automatically provided at application startup (cumbersome for applications that are rarely used or used for the first time as, for example, libraries may be not be in a browser cache and must be downloaded, etc.) or provided on-demand (which results in extra network round-trips for loading required library parts which have a negative influence on UI performance). Fast rendering of a UI can require a high-end client. Older or not-so-powerful client devices can lead to a poor user experience and force developers to concentrate on multiple UI versions for various client types, versions, etc.; a time-consuming and expensive prospect. Additionally, a client-side rendering of a UI typically uses the client CPU extensively, which can lead to higher battery drain on the client device, and consequently to a shorter overall runtime.
US 2013/0046815 A1 discloses systems and methods for providing remote access to an application program. A server remote access program may cooperate with a screen scraping application to provide screen data to a client computing device. The display associated with the application program may be resized or cropped by a server for display on the client computing device. The client may connect to the server using a client remote access program that receives inputs from a user interface program.
US 2002/0083132 A1 discloses a method, system, and computer-readable code for a technique by which multiple Web pages can be dynamically bundled (i.e. packaged) and downloaded for accessing on a user's workstation, enabling the user to perform a meaningful interaction even in the absence of an ongoing network connection. The proposed technique uses an on-demand bundling approach, ensuring that a requesting user will receive the most recent versions of any bundled files. The proposed technique often serves to reduce the number and duration of network connections required, enabling a user to work productively while offline. Further, the bundle may optionally contain executable code such as one or more servlets, which will execute on the user's workstation to enable dynamic content generation. Messages may be created and queued during processing of the downloaded bundle, for sending to a server when the user subsequently establishes a network connection. Optionally, data mining software may be used advantageously with this technique, to increase the likelihood of constructing a bundle that will meet the user's needs throughout the offline interaction. Additionally, transcoding may optionally be performed on a bundle destined for a particular user, that will tailor the bundled software to the user's current working environment.

US 2008/222273 A1 discloses a server that communicates with a client device to respond to requests for page content with image data and properties of elements of the page represented in the image data. The client receives the image data corresponding to a server-rendered image of the page, and displays a representation of the page based on the image data.
The client uses the property data to convert user input actions relative to the displayed representation into interactive browsing actions relative to elements of the page that are visible in the displayed representation. The client thus emulates interaction with an actual page rather than the image that is actually displayed. Thus, according to an aspect, the problem relates to providing a method, a non-transitory computer-readable medium and a computer system for generating user interface more efficiently.
This problem is solved by the independent claims. Preferred embodiments are defined in the dependent claims.

### SUMMARY

The present disclosure relates to optimizing software application user interface performance.

A user interface (UI) is rendered as an image for display on a client computing device and a UI descriptor generated describing interactive elements of the UI is generated. The image is compressed into a compressed image format. The compressed image and the UI descriptor are transferred to the client computing device where the UI is rendered using the compressed image and the UI descriptor. A request is received for a dynamically generated interactive element from the client computing device, the request based on an interactive event received on the rendered UI and associated with an interactive element of the UI described in the UI descriptor. A dynamically generated interactive element is transmitted to the client computing device, the dynamically generated interactive element configured to be visible on the UI and to accept input.

Computer systems, apparatuses, and computer programs recorded on one or more computer storage devices are each configured to perform the actions of the methods. A system of one or more computers is configured to perform particular operations or actions by virtue of having software, firmware, hardware, or a combination of software, firmware, or hardware installed on the system that in operation causes or causes the system to perform the actions. One or more computer programs are configured to perform particular operations or actions by virtue of including instructions that, when executed by data processing apparatus, cause the apparatus to perform the actions.

A computer-implemented method includes: rendering a user interface (UI) for display on a client computing device as an image; generating a UI descriptor describing interactive elements of the UI; compressing the image into a compressed image in a compressed image format; transferring the compressed image and the UI descriptor to the client computing device where the UI is rendered using the compressed image and the UI descriptor; receiving a request for a dynamically generated interactive element from the client computing device, the request based on an interactive event received on the rendered UI and associated with an interactive element of the UI described in the UI descriptor; and transmitting a dynamically generated interactive element to the client computing device, the dynamically generated interactive element configured to be visible on the UI and to accept input.

The subject matter described in this specification can be implemented in particular implementations so as to realize one or more of the following advantages. First, over server-side rendering, the described subject matter allows for lower bandwidth network transmission, little to no artifacts in a client-rendered user-interface (UI), low lag, and high interactivity. Second, over client-side rendering, the described subject matter allows for no initial high-bandwidth network requirements, high-performance from low-end client computing devices, and fast UI rendering/low resource consumption on client computing devices. Third, a described enhanced implementation of the described subject matter allows for better performance, as only one network round-trip needs to be initiated, executed, and the results processed; less coding at both client and server to initiate and process the requests; less resource consumption and thus longer battery life for mobile devices that serve as clients; and better performance for networks with low bandwidth. Fourth, as each additional sequential network round-trip to request/obtain data adds to an overall response time, the single network round trip of the described enhanced implementation only impacts the overall response time once due to latency. Other advantages will be apparent to those of ordinary skill in the art.

The details of one or more implementations of the subject matter of this specification are set forth in the accompanying drawings and the description below. Other features, aspects, and advantages of the subject matter will become apparent from the description, the drawings, and the claims.

### DESCRIPTION OF DRAWINGS

FIG. 1A is a block diagram illustrating an exemplary hardware/software architecture for optimizing software application user interface performance, according to an implementation.
FIG. 1B is a block diagram illustrating an alternative exemplary hardware/software architecture for optimizing software application user interface performance using a modified Model-View-Controller (MVC) model on each of a client and a server, according to an implementation.
FIG. 2A illustrates an example image format extended with a signature section to hold described UI descriptor, according to an implementation.
FIG. 2B illustrates an example structure for a data chunk as described in FIG. 2A, according to an implementation.
FIG. 3 is a flow chart of an example method for optimizing software application user interface performance, according to an implementation.
FIG. 4 is a flow chart of an enhanced method for optimizing software application user interface performance, according to an implementation.
FIG. 5 is a block diagram of an exemplary computer used for implementing the described subject matter, according to an implementation.

Like reference numbers and designations in the various drawings indicate like elements.

### DETAILED DESCRIPTION

The following detailed description is presented to enable any person skilled in the art to make, use, and/or practice the disclosed subject matter, and is provided in the context of one or more particular implementations. Various modifications to the disclosed implementations will be readily apparent to those skilled in the art, and the general principles defined herein may be applied to other implementations and applications without departing from scope of the disclosure. Thus, the present disclosure is not intended to be limited to the described and/or illustrated implementations, but is to be accorded the widest scope consistent with the principles and features disclosed herein.

In a client-server software application environment, a software application user interface (UI) typically suffers from poor performance, because either standard server-side or client-side rendering of the UI affects performance as a tradeoff for increased user experience. Each of server-side and client-side rendering suffers from issues that can effect a user interface experience for a user on a client computing device.

For example, in server-side rendering, images that are transmitted from a server to be displayed on a client require high network bandwidth, display artifacts due to image compression technologies used to reduce bandwidth requirements, and can cause network lag affecting interactivity. In particular, it its most extreme form, the server-side rendering approach generates a full image (still or video) at the server that is transmitted to the client to be presented to the user. As a consequence, this approach has high bandwidth requirements. Less extreme forms transfer compressed images or compressed video streams. Examples are video streaming services (e.g., NETFLIX or HULU) which use mechanisms such as MPEG compression. Another option is to transfer only a changed part of a UI image (e.g., the approach chosen by CITRIX and LYNX). Regardless of the method chosen, bandwidth requirements are fairly high, and the resulting UI image can exhibit various visual artifacts due to, for example, "lossy" image compression techniques and other server-side rendering factors. Further, lags in presentation of transferred images are to be expected, which leads to poor interactivity. Overall, server-side rendering offers a low-fidelity user experience; highly interactive UIs can be almost unusable due to network lag.

On the other hand, in client-side rendering, both data and detailed UI rendering instructions are transmitted from the server to the client. The client then interprets the rendering instructions and generates the UI. One representative of this class is the X-WINDOWS system where the server sends individual drawing commands to a terminal, which generates a UI line-by-line, pixel-by-pixel, and word-by-word. In other approaches (e.g., SAP UI5), rendering code rather than rendering instructions can be transmitted to a client. In this approach, JAVASCRIPT and CSS libraries at the client handle the rendering and read a rather small UI description and render the UI elements according to the description. Additionally, the libraries read the data to be displayed in the UI elements from the server and render it. Finally, the JAVASCRIPT libraries handle a large part of the user interaction at the client.

The down-side of the client-side rendering approach is the large amount of data that needs to be transferred to the client to implement the rendering of the UI, for example in a browser application executing on the client. Typically, either all required libraries are automatically provided at application startup - which is cumbersome for applications that are rarely used or used for the first time. For example, in this scenario, libraries may be not be in a browser cache and must be downloaded, etc. In some implementations download requirement can introduce initial response times of up to fifteen seconds depending on the network bandwidth). In the case of applications that are rarely used, the libraries may be purged from a browser cache between uses and may have to be reloaded. On some mobile devices (e.g., APPLE IPHONE 4S and older, other smart devices, etc.) the situation can be even worse, as these devices can have a memory-based cache which is purged when the browser is pushed into the background through use. Consequently, the libraries need to be reloaded each time the browser is brought to the foreground.

The alternative to loading all libraries at startup is to load them on demand. The drawback here is that extra network round-trips for loading the required library parts have a negative influence on UI performance. Additionally, fast rendering of a UI can require a high-end client. Older or not-so-powerful client devices can lead to a poor user experience and force developers to concentrate on multiple UI versions for various client types, versions, etc.; a time-consuming and expensive prospect. Additionally, a client-side rendering of a UI typically uses the client CPU extensively, which can lead to higher battery drain on the client device, and consequently to a shorter overall runtime.

What is needed is a way to improved client-server UI performance with only minor trade-offs with respect to user experience. This disclosure describes optimizing software application user interface performance with a balance between server-side rendering and client-side interactivity. The described subject matter is neither a pure server-side rendering approach, nor a mere client-side one. Rather, the described approach combines server-side and client-side rendering to achieve optimal performance without sacrificing a smooth user experience.

As will be described in greater detail below, the fundamental idea to remedy or at least mitigate the above-mentioned downsides to the server-side/client-side rendering techniques is to perform most of the bitmap rendering of a UI at a server, while allowing user interactivity to be handled by a client. In some implementations, the described subject matter can be implemented using standard browser technologies; namely, an image representing the UI and a JSON UI descriptor are transferred to the browser. The image represents the UI that is shown to the user, while the UI descriptor describes interactive areas associated with the UI. As will be understood by those of ordinary skill in the art, the described subject matter can also be implemented in a cloud-based computing environment.

### Parallel Network Transmission Implementation

Consider a simple example application UI which reads user input on a first screen including three UI elements, namely a text ("Type here and click OK"), an input field, and an "OK button." When users completed typing in their input, they click on the OK button to navigate to a second screen. The second screen shows the information the users entered on the first screen.

When implementing this example application UI consistent with a typical implementation of the following described subject matter, the server can render the entire UI as a image, such as a bitmap or other image format. The server then compresses the image. In some implementations, the compression can be to a lossless image format (e.g., a PNG or other lossless image format). Additionally, the server creates a JSON file with a UI descriptor such as:

```
            {
                  "name": "Input Screen",
                  "type": "root",
                  "width": 1920,
                  "height": 1080,
                  "areas": [
                          {
                               "type": "input-field",
                               "name": "textInput",
                               "left": 750,
                               "top": 550,
                               "width": 600,
                               "height": 20,
                               "value": ""
                        },
                        {
                               "type": "button",
                               "name": "okButton",
                               "left": 1480,
                               "top": 550,
                               "width": 500,
                               "height": 20,
                               "target": "nextPage"
                        }
                        ]
            }
```

As can be seen, the UI only contains two interactive elements, namely the input field and the OK button, as the "Type here and click OK" text is not interactive and, in this simplified example, there is no need for the text to be interactive.

In typical implementations, the UI descriptor can be a JAVASCRIPT object, which is organized as follows:
- It contains a property "name" set to a value of "Input Screen", which is a unique identifier of the UI, and a property type, which describes the type of the screen ("root").
- The next two properties width and height define the size of the above-described UI bitmap, which is contained in the described PNG file.
- The property "areas" is an array of JAVASCRIPT objects, one per interactive user element. For example, in this example, there is one array element for the input field, and one for the OK button.
- The first property of array "areas" describes the input field, as indicated by the "type" property "Input-field."
   ∘ The property name contains a unique name for the input field ("textInput"), while left, top, width and height properties describe the position and size of the input field.
   ∘ The property "value," eventually, contains a default value for the input field. Here, the default value is an empty string.
   ∘ The second element of the array "areas" describes the OK button, again by providing a type ("button"), a unique name ("okButton"), position, and size, as for the input field.
   ∘ In contrast to the input field there is no value property, as a default value for a button makes no sense. Rather, there is a "target" property instead, which defines the action to take if the button is clicked.

After transferring the PNG and the JSON file to the client, the client typically proceeds according to the following methodology:
1) The client creates an image map:
   a. Iterating over the elements of the "area" array property in the UI descriptor to create the interactive areas for the image map.
   b. Creates a MAP HTML element for the image map.
2) Makes the image map visible on the client.

For example, a function showImage() similar to the following can be used to execute steps 1 and 2:

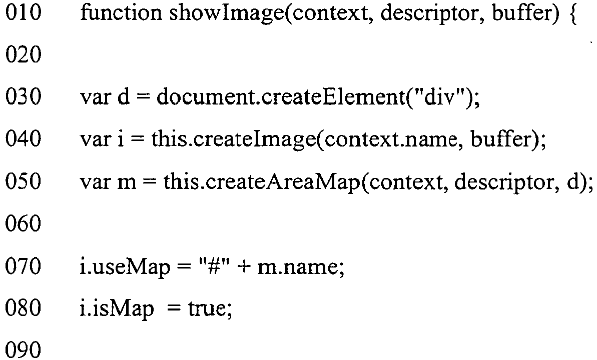

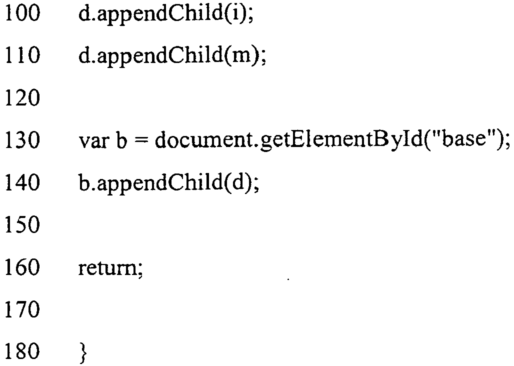

In typical implementations, function createlmage() in line 040 can be used to create an HTML IMG element from the PNG file it receives. Then, function createAreaMap() in line 050 can be used to create HTML MAP and AREA elements for the interactive UI elements. The image element is then upgraded to an image map at lines 070 and 080. The remainder of the function (including line 030) are used to make the image visible, where both the image and the map are added to a newly created HTML DIV element, which is then appended to the DOM. Appending it to the DOM makes the DIV and its contents visible (e.g., base DIV element accessed in line 130).

Function createImage(), for example: 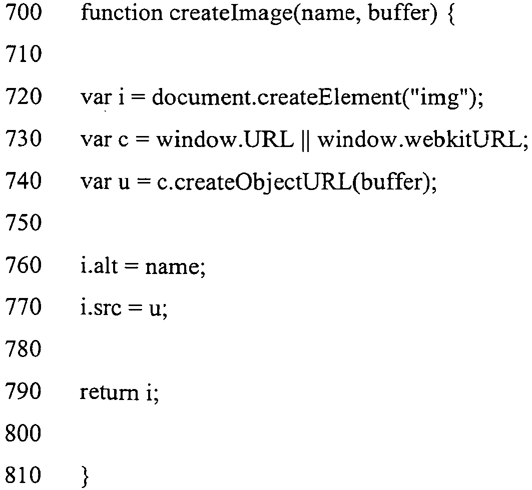 uses a default approach to convert a binary file loaded by the browser into an HTML IMG element: The IMG element is created dynamically at line 720, the object required for the conversion is selected in a browser-dependent fashion at line 730, and the contents of the transferred file are converted by a call to function createObjectURL() in line 740. When the URL created in line 730 is assigned to the IMG element, the actual conversion takes place.

Function createAreaMap(), for example:

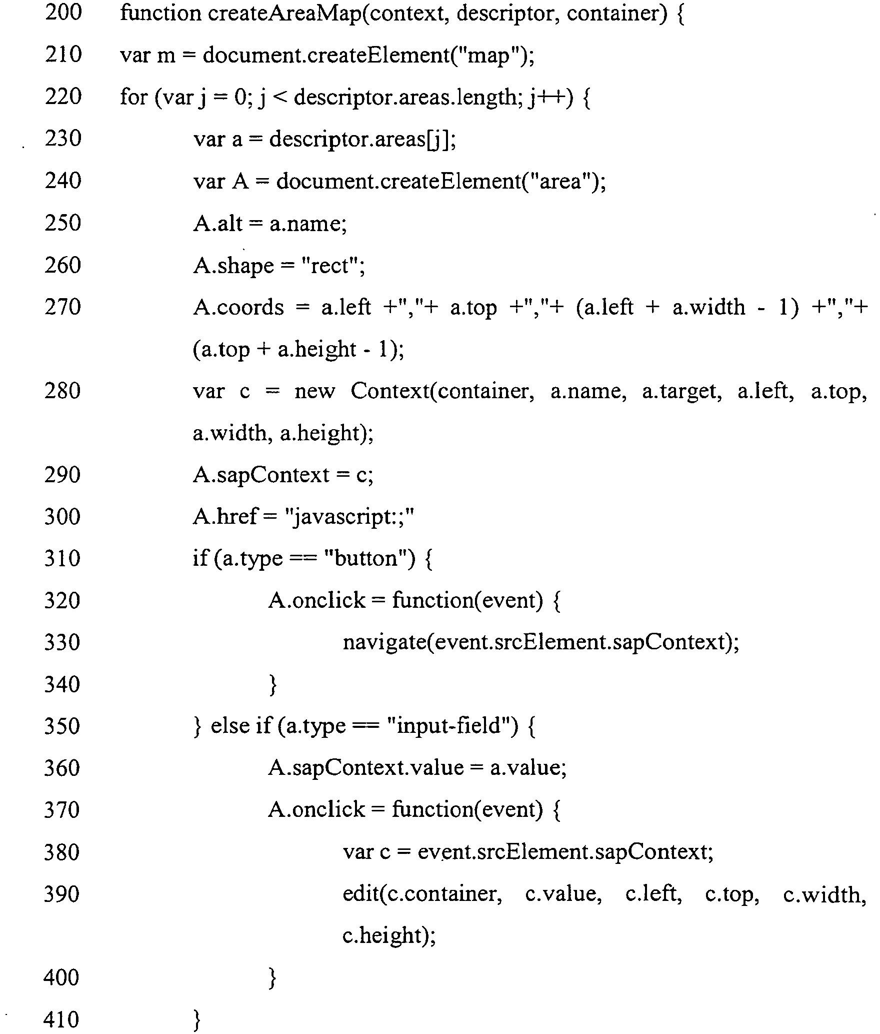

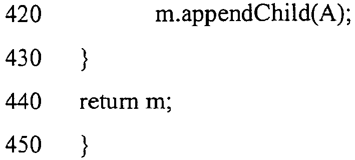

The function first, creates an HTML MAP element in line 210. Next, it loops over all elements of the "areas" array in the "descriptor." The block of the for-loop consisting of lines 230 to 430 consists of three parts:
- Part 1 (lines 230 to 290): Creates an HTML AREA element per entry in the "areas" array. It configures each AREA element with its name, shape, position and size. Position and size are set using the "cords" property of the "area." Then, some additional data from the "area" and the "descriptor" is appended to the AREA element as a JAVASCRIPT object (see, e.g., lines 280 to 290.) This "Context" object is a mere container for some properties that will later be used to handle the user interactions. It does not have any methods. Its use will become clear later in the text.
- Part 2 (lines 300 to 410): Defines the interaction behavior of the newly created AREA. First, in line 300, an empty JAVASCRIPT statement is added as "href" property to the AREA. In the next step, a onclick() handler is added to the AREA. In combination, the href property and the onclick() handler make the AREA a clickable element in the image map. For an AREA of type "button," the onclick() handler calls function navigate() with the "Context" property of the AREA element that was clicked on as argument (e.g., see lines 320 to 340.) As we will see later, the method navigate() handles the navigation to some other screen in the application. For an input field (type "input-field"), first the value of the input field is stored in the context of the AREA, as can be seen in line 360. Then, the onclick() handler is added. The onclick() handler of the input field calls function edit(). The arguments of the call to edit() in line 390 are the container of the input field, the input field value and the position and size the of the AREA that was clicked on. The container is the HTML DIV element that will become the parent of the input field in function edit(). All arguments passed to edit() were stored in the context of the AREA when the AREA was created (e.g., see Part 1, lines 280 and 290.)
- Part 3 consists only of line 420. Here the newly created AREA element is added to the MAP element that was created in line 210.

Function edit(), for example: 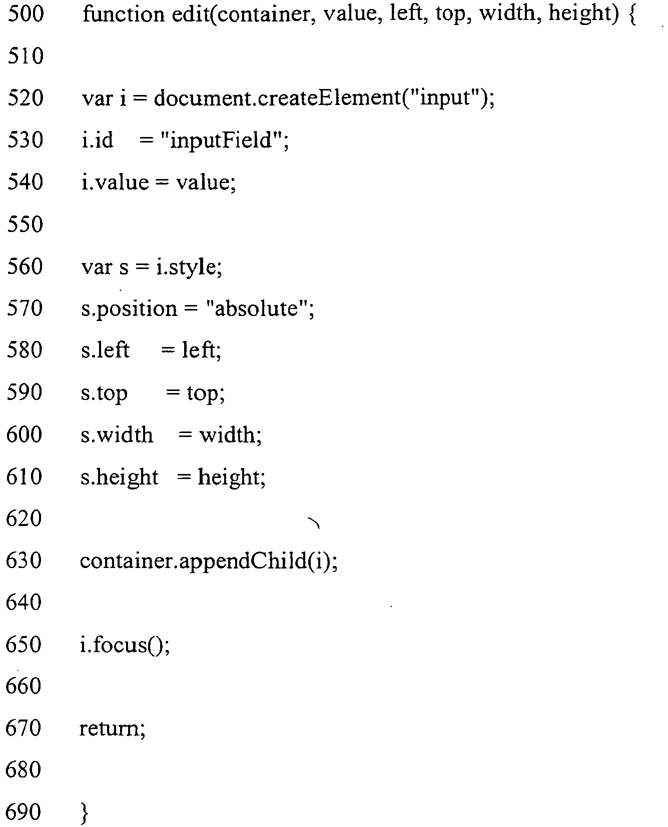 demonstrates how, in an implementation, the interaction on the UI can be handled. Function edit() is called, when a user clicks on an AREA in the image map that represents an input field. In this case, an HTML "INPUT" element is dynamically created, and the value of the input field is assigned (e.g., see lines 520 to 540). The INPUT element is then positioned properly on the screen (e.g., see lines 560 to 610) and appended to the DOM (line 630) to make it visible. Finally, the focus is set on the input field (line 650) to show the cursor and enable user input.

In typical implementations, there are at least two ways to retrieve the value of the input field after the user has completed editing: Either, an onblur() handler is added in Part 2 of function createAreaMap() (in this way, the onblur() handler function is called whenever the input field loses the focus), otherwise, before navigating away from the screen, the values of all created input fields could be collected by some other function.

In function createAreaMap(), the function navigate() is typically called when the user clicks on the OK button. Note that the context of the AREA element the user clicked on is passed as argument to navigate(). The application is now supposed to display the second screen.

In typical implementations, function navigate(), for example: 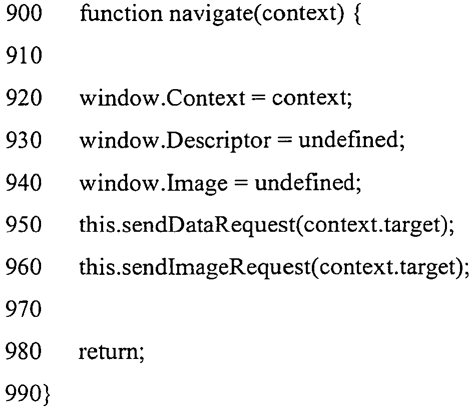 implements a screen change with the help of three other functions (e.g., sendDataRequest(), sendImageRequest(), and showImage()). Function navigate() typically executes its code synchronously and triggers two asynchronous requests by calling functions sendDataRequest() and sendImageRequest() which each initiate an asynchronous request. In typical implementations, either of sendDataRequest() or sendImageRequest() can call function showlmage() (described above). Similar to navigate(), showImage() typically executes synchronously and initiates display of an image that was turned to an image map based on the information contained in a UI Descriptor.

In function navigate(), the value of the parameter "context" is stored in the global variable "Context" (e.g., see line 920). A global variable is required to access the context after the responses to the two asynchronous requests have arrived. Next, in lines 930 and 940, two global variables are reset, namely "Descriptor" and "Image." These variables are used by sendDataRequest() and sendImageRequest() to assure both the UI descriptor and image have been loaded. This is the prerequisite for calling showImage(). Finally, navigate() calls sendDataRequest() and sendImageRequest() to load the UI descriptor and the image of the next screen. Both function calls have the "target" property of the context as arguments. The "target" property is a unique identifier that can be used by the server to identify required data for the next screen.

The two functions sendDataRequest() and sendImageRequest() load the UI descriptor and the image of the next screen, respectively. They are very similar in structure, for example: 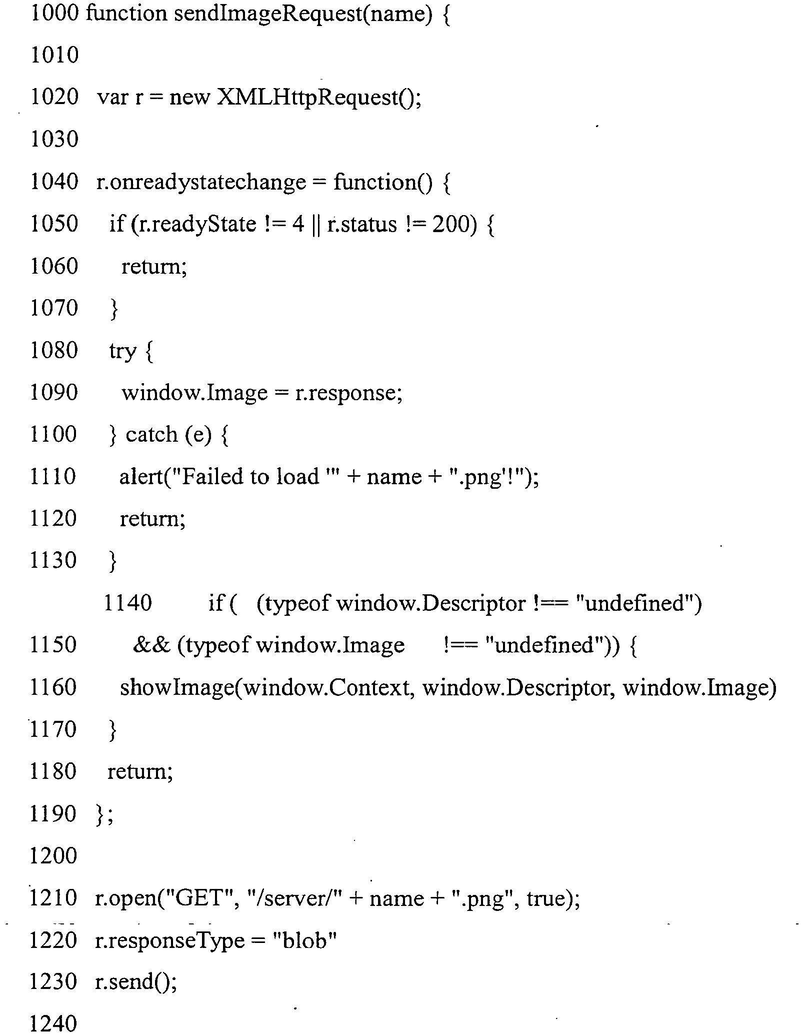 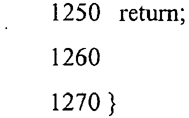 and

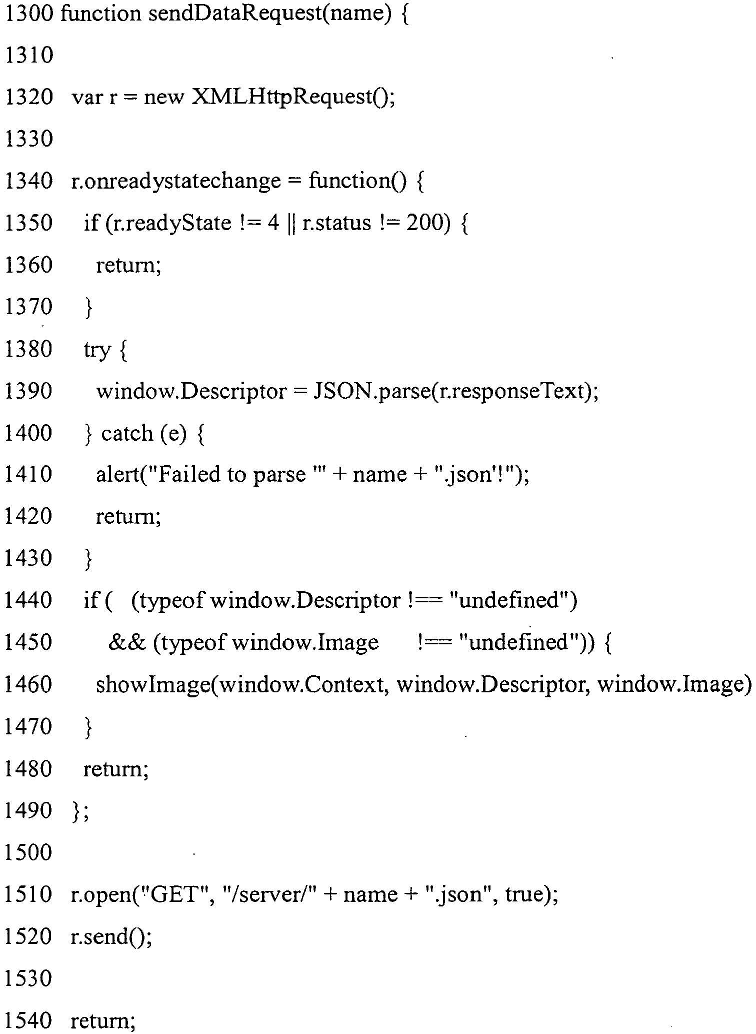

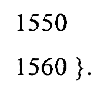

In line 1020 of the function sendImageRequest(), an XMLHttpRequest object is created This object is used to send a request to the server. Lines 1040 to 1190 define the function value of the onreadystatechange() property. This function defines what happens after the request completed. This will be discussed in the next two paragraphs. Line 1210 opens the request, defining the URL with the first argument and the asynchronous execution by the second. Line 1220 sets the responseType of the XMLHttpRequest object to BLOB. This setting determines that the response is provided as a binary object, which can then be converted to an image. (As described above, function createImage() performs this task.) Eventually, the request is sent in line 1230.

The onreadystatechange function is called several times as the request is processed by the server. Here, processing can continue only after the image has been fully loaded (as checked in lines 1050 to 1070). The function returns immediately, unless both the readyState property of the request is equal to 4 and the status property is equal to 200. When both conditions are met, the image has been completely loaded. Then, the image sent back by the server is read from the response property of the request and assigned to the global variable Image. If the response cannot be read an error is displayed and the function returns (e.g., see lines 1080 to 1130.) Finally, the onreadystatechange function of sendImageRequest() decides whether all data required for the next screen is available. The global variables Descriptor and Image had been set to undefined in function navigate(), before the asynchronous requests were initiated. Variable Image has been set to the image in this function. Now assuming that the request to load the descriptor has not yet completed, the global variable Descriptor will then be undefined. Consequently, function sendImageRequest() will terminate without calling showlmage() (e.g., see lines 1140 to 1170.)

Assuming the UI descriptor has also been loaded completely, the global variable Descriptor was set to a JSON object by the onreadystatechange function of function sendDataRequest(). Consequently, both global variables have a value different from undefined, and function showlmage()is called in line 1160. Now the context object that was stored in the global variable Context now comes in handy: when calling showImage() it is passed as argument, as well as the other two global variables Descriptor and Image.

Function sendDataRequest() typically differs only in three places from function sendImageRequest():
1) In the onreadystatechange function, the server response is not assigned to the global variable Image. Rather, the response is parsed as a JSON object, and the result is assigned to the global variable Descriptor.
2) The file extension of the URL is json to request a JSON object as descriptor, rather than a PNG image.
3) The line defining the responseType as blob is missing. This is because JSON is a text format, which is the default for responseType.

An example web page, for example:

```
            <html>
                  <head></head>
                  <body>
                        <script>
                              // methods as listed in other Figures
                              function Context(container, name, target, left, top, width,
            height) {
                                     this.container = container;
                                     this.name = name;
                                     this.target = target;
                                     this.left = left;
                                     this.top = top;
                                     this.width = width;
                                     this.height = height;
                              }
                        </script>
                        <div id="base"></div>
                        <script>
                              var b = document.getElementById("base");
                              var c = new Context(b, "Input Screen", "inputScreen", 0, 0,
            1920, 1080);
                              navigate(c);
                        </script>
                  </body>
            </html>
```

typically consists of three parts:
1) A script block that contains the functions discussed above,
2) An HTML DIV element, called "base," which is used as the root container, and
3) Another script block that triggers loading of the initial screen.

Parts 1 and 2 are trivial. The second script block first gets the base DIV element created in Part Two. Then, it constructs a Context object for the initial screen. As first argument it passed the base DIV, which serves as the root container. The second argument is the human readable name of the screen, here "Input Screen." Next, the string inputScreen is passed as unique name of the screen. Finally, the coordinates (0, 0) are passed as position of the screen, and (1920, 1080) as size.

Eventually, in Part 3, the function navigate() is called with the newly created Context object as argument. This initiates loading of the first screen of the application, the "Input Screen."

As will be understood by those of ordinary skill in the art, the preceding simplified example described how simple UIs with input fields and buttons can be implemented using the described subject matter. As will be also understood by those of ordinary skill in the art, there are many other varied interactive elements (e.g., such as pop-ups, containers, drop-down list boxes, scrolling lists, etc.) that can be used to form UIs. The following paragraphs, while not exhaustive in terms of all possible UI elements, describe how these UI elements can be implemented to provide a complete set of UI elements in varied interactive client UI.

An overlay can be used to implement, for example, pop-ups, containers for expanding screen elements, etc. In some implementations, assuming that a user clicks on a UI element to show a pop-up element, the image for the contents of the pop-up can be requested in the same fashion as when the user clicks on a button to navigate to another screen. Yet, the returned image may need to be presented on top of the current screen, potentially with a frame around it. This can be achieved, for example, by setting the "type" property in the UI descriptor to "content." The function showImage() then also needs to act differently, as it cannot merely just append the new image map or replace the old one. Rather, it needs to place the newly created HTML DIV element on top of the current image map. Here, the position of the DIV element can be provided by the server using the UI descriptor. If a frame around the pop-up is desired, the frame can be created in the newly created DIV element, and the image map for the pop-up can be integrated into it. A similar methodology can be employed to implement containers that can be expanded and shrunk by clicking on a button. Some additional properties of the UI descriptor can be used to determine whether the container is located to the left, the right, the top or the bottom of the button. Further properties can also be used to define an animation for how the container contents appear or vanish.

Another example is for implementing scrolling lists. Assume having a UI with a scrollable list containing more elements that can be displayed at a time on a UI (e.g., scrollable list elements 1-49 above visible scrollable list elements, visible scrollable list elements 50-55, and scrollable list elements 56-n below the visible scrollable list elements. In one implementation, the scrollable list can be implemented by tiling the scrolling list; that is, the scrolling list is divided into parts, called "tiles," containing a fixed number of scrollable list elements. Then, when creating the interactive areas, a particular number of tiles are loaded from the server (e.g., three). The particular number of tiles can be used to cover a range of list elements (e.g., tile one can cover scrollable list elements 45-49, tile two can cover scrollable elements 50-54, and tile three can cover scrollable elements 55-59). In this example, tile two covers visible elements 50 to 54, while tiles one and three cover invisible list elements. In this implementations, the three tiles are arranged in an HTML DIV element, called the list DIV, in the order described. The list DIV is then clipped and positioned such that only the visible part of the list is displayed.

When the user drags the scrollable list in either direction, the clipping of the list DIV is changed accordingly. As soon as a forward and backward line limit is reached (e.g., between scrollable list elements 47/48 and 56/57), the next tile for the appropriate scroll direction is loaded. For example, when the user scrolls the list down such that scrollable list element 57 becomes visible, the lower line limit is reached, and another tile (e.g., tile four) containing scrollable list elements 60 to 64 is loaded. The new tile four is added to the list DIV, while tile one at the "top" can be removed. Finally, the clipping needs to be adapted, for example, for speed, visual effect, etc. to guarantee a proper scrolling impression for a user.

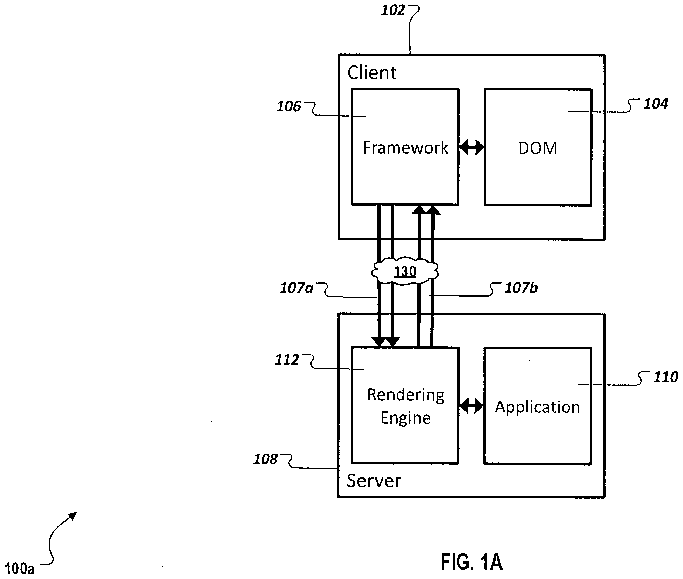

FIG. 1A is a block diagram 100a illustrating an exemplary hardware/software architecture for optimizing software application user interface performance, according to an implementation. The client 102 consists of a domain object model (DOM) 104 and a framework 106. The DOM 104 is a cross-platform and language-independent convention for representing and interacting with objects in, for example, HTML, XHTML, and XML documents. The nodes of every document are organized into a tree structure, called a DOM tree. Objects in the DOM tree may be addressed and manipulated by using methods on the objects. The public interface of the DOM 104 is typically specified in its application programming interface (API). While the client 102 is considered in this example to be a browser, in other implementations, the client 102 can be another type of client application, a combination of a browser and another client application, etc. On the server-side 108, components include a server-based application 110 and a rendering engine 112. The rendering 112 engine produces the images as well as the UI descriptors as described above. The client 102 and server 108 (and associated components) communicate over network 130. Components of the client 102 and server 108 can communicate over network 130, a system bus (not illustrated), or through some other means consistent with this disclosure.

When an application 110 built to use the above-described methodology is started, a web page (e.g., the above-described web page) can be loaded. When the above-described process has completed, the browser 102 hosts the DOM 104 of the web page, as well as the above-described JAVASCRIPT functions. The final JAVASCRIPT element in the web page then calls function navigate(), which triggers the two above-described requests (requests 107a) to the server 108. As described above, one request of requests 107a retrieves the UI descriptor and the other request retrieves the image. In the simple example described above, both requests transfer only the "target," which indicates the user interaction to the server 108. As will be appreciated by those of ordinary skill in the art, in a more complex or real-world application, more state information would be passed, (e.g., values of the UI elements, etc.) Based on this additional information, the server 108 can reconstruct the state and execute the desired user interaction.

After the application 110 has processed the user interaction, the application 110 instructs the rendering engine 112 to produce the above-described image and the UI descriptor. Rendering an image is state-of-the-art, and hence will not be described in detail. The information required for the UI descriptor can either be provided by the application 110 or generated during the rendering process. An example of information that is provided by the application 110 is the name of the screen and what type the resulting image has. For example, if a user clicked on a button that opens a container (as described above), the application 110 can provide information that the response is intended to describe the contents of a container. Examples for information that can be generated during the rendering process are the types, positions, and sizes of interactive elements, while the name and the target again need to be provided by the application. When rendering of the response has completed, the rendering engine 112 returns both a UI descriptor and image consistent with the preceding description using requests 107b. The framework 106 then reads the UI descriptor and image and processes them as previously described. The framework also handles interactions on the client 102 UI, until a next pair of server requests is triggered.

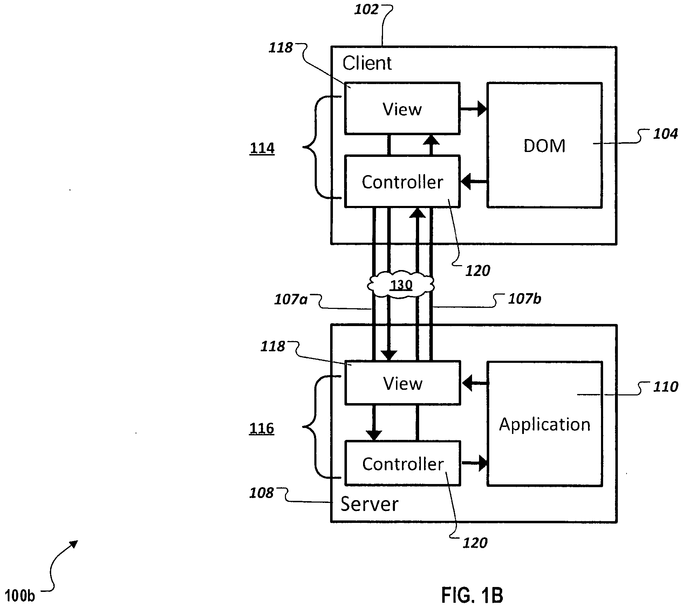

FIG. 1B is a block diagram 100b illustrating an alternative exemplary hardware/software architecture for optimizing software application user interface performance using a modified Model-View-Controller (MVC) model on each of the client 102 and server 108 (MVC 114 and 116, respectively), according to an implementation. As in FIG. 1A, the client 102 and server 108 (and associated components) communicate over network 130. Components of the client 102 and server 108 can communicate over network 130, a system bus (not illustrated), or through some other means consistent with this disclosure.

The MVC model separates data on the screen from the way it is presented and how interaction with the data happens. This approach simplifies the modification of applications. Taken to extremes, this approach allows replacing a GUI for an application by a machine-readable interface only by exchanging the view and the controller, but without touching the application itself.

On the server-side, the application 110, which acts as a model, contains the data that is displayed on one screen. The server-side view 118 defines how the data is arranged, while the server-side controller 120 can determine UI user interaction patterns. In some implementations (as illustrated), the view 118 and the controller 120 need to be split into two separate portions: a client-side and a server-side portion, respectively. The client-side portion of the controller 120 handles the interaction part of the UI - that is it can handle, for example, string editing, setting of checkboxes or radio buttons, clicking on buttons, and other UI user interactions. The server-side portion of the controller 120, by contrast, determines what needs to happen when a user clicks a certain button, scrolls in a list, etc. of a UI.

The server-side portion of the view 118 is primarily concerned with producing images for the current state of the model (application 110). The server-side view's 118 other task is also to generate a corresponding UI descriptor. The client-side portion of the view 118 places images on the screen as determined by this generated UI descriptor. The client-side view 118 may also provide functionality including animations (such as when opening a container element, fading in a pop-up window, and other animations). In some implementations, the client-side view 118 can also be tasked with handling paging operations (e.g., for a scrolling list or other paging operations). The client-side part of the view 118 can also determine, consistent with the example provided above, when a next tile of a scrollable list is required and to request it from the server 108 in time to provide a smoothly operating, lag free, low-bandwidth, etc. UI experience.

As will be appreciated by those of ordinary skill in the art, the described subject matter can be modified in many ways to serve one or more special purposes. For example, in some implementations, when rendering a UI at a server, only empty UI elements could be rendered. The data that is displayed in input fields, lists, drop-down list boxes etc., can then be loaded in a parallel request, and rendered and displayed at the client. This would reduce the bandwidth requirements even beyond the bandwidth requirements of the proposed approach, as image compression would be better overall.

Large JAVASCRIPT libraries are typically required at the client to execute a rendering. The processing of the large libraries can be cumbersome, because, for example, loading more than one megabyte of rendering code before the first application screen becomes visible can result in lag and other issues for a user. This is specifically relevant for applications that are used infrequently by the user, as the libraries would have likely been purged from a browser (or other application) cache due to being considered stale, etc. As such, loading a first screen as an image would be beneficial due to the low bandwidth requirements. While the user is busy working with the first screen, the libraries can then be downloaded in the background. Additionally, taking this approach even further, even an incremental replacement of UI element by rendering libraries is possible. Initially the complete UI is an image, but during the execution of the application, the UI elements that were originally rendered at the server are successively replaced by client-side rendered UI elements fast enough so that a user either does not notice or in a manner so as to not affect desired user interactivity (e.g., determining likely user patterns and rendering to-be-likely-used UI elements).

In another implementation, where a client has only little computing power, rendering a UI using JAVASCRIPT could take forbiddingly long. Therefore, one possible option to beneficially handle a user interaction is to send an image with a very small framework.

### Single Message Enhancement Implementation

The above-described subject matter details a method and system of how to present application UIs efficiently using two parallel network transmissions (e.g., refer to requests 107a/b in FIGS. 1A and 1B): The first message transfers an image, while the second, parallel message, transfers so-called "UI descriptor" defining which parts of the image map are interactive areas, and what should happen if a user clicks on an interactive area of a UI. At a client, for example a browser, the image is converted into an image map using the UI descriptor. The following description describes methods to further improve performance of the above-described method and system by transferring both the image and the descriptor in a single message. As will be understood by those of ordinary skill in the art, the above-described hardware/software architecture can be adapted for enhanced implementation to use a single message instead of parallel requests in 107a/b.

There are currently no stable/robust methods for combining the above-described UI descriptor (text) and image data into one message (file) in a manner needed to support the concepts described in this disclosure. One option is to define a new MIME/Internet media type (MIME type) can be defined to act as a container for a compressed image and the data contained in the UI descriptor (as previously described). A MIME type is a standard identifier used on the Internet to indicate the type of data that a file contains and to allow identification of attachment files, determination of how to display of output filed that are not in HTML format, to classify data files, etc. A MIME type is composed of a type, a subtype, and zero or more optional parameters. New media types can be created with the procedures outlined, for example, in RFC 6838. For example, a new MIME type such as "image/interactive" could be defined. In this implementation, the type is "image," the subtype "interactive," and there are no arguments.

In some implementations, an interactive image as described by the new MIME type can consist of the following sections:
- Metadata: The metadata section can either consist of a JSON document (see above-defined UI descriptor," otherwise, to save space, several fields can be predefined. The label can then be omitted. For example, looking at the above-defined UI descriptor, if the format defines the sequence and semantics of the first five fields to be name, type, width, height and areas, the labels are not required. In addition, for each area in the areas array the seven fields: type, name, left, top, width, height, and value/target can be default. Again, the label for those fields can be omitted. Metadata extension: In case additional fields are required, fields can be added as name-value pairs.
- Image data: A compressed image. In some implementations, the compression can be lossless (any lossless compression mechanism is acceptable). The most important criterion for the compression mechanism is that is compresses reasonably well with high speed. Rather than minimal result size or highest speed, the proper balance between fast compression and acceptable result size is most important. For example, the PNG compression library png-encoder-1.5 for JAVA compresses bitmaps to PNG files. The degree of compression can be controlled using a parameter "compLevel," which can take values from 0 to 9. The parameter value 0 returns an uncompressed image, while for 9 the most powerful compression mechanism is invoked. While the compression is fastest for 0, the result is rather large. On the other hand, for "compLevel 9" the compression takes longest, but the result is rather small. Tests shows that in typical implementations, a compression level of 4 yields the best balance between speed and result size.

In a second option, a Binary Large Object (BLOB) can be used to transfer data from the server to the client by initiating an XHTMLRequest at the client (see below). In typical implementations, the BLOB consists of a UI descriptor length field, the UI descriptor, and the image. Again, the UI descriptor can be a standard JSON file, but it can also be minimized by defining the sequence of the fields, such as:

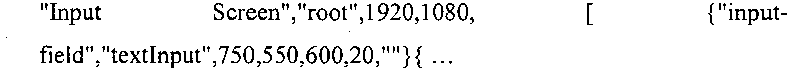

In some implementations, the BLOB can also be packed at the server by packing code, for example:
response.setContentLength(10 + (int) D.length() + (int) I.length());
OutputStream o = response.getOutputStream();
o.write(String.format("%lOd", D.length()).getBytes());
this.writeFile(D, o);
this.writeFile(I, o);
o.close();
Here, the code snippet assumes that there are two InputStreams defined, namely D and I, for the UI descriptor and the image, respectively. Further, the code snippet is assumed to run in the doGet or doPost method of a JAVA servlet, such that the response parameter is defined. First, the content length of the response is set to the size of the UI descriptor plus the size of the image plus a 10 character field for the UI descriptor length. Next, the response output stream is obtained. Following, first the UI descriptor length is written as an integer that requires a field size of 10 characters, then the UI descriptor and the image contents are written. Finally, the response is closed.

In typical implementations, a BLOB is requested from the client using JAVASCRIPT code, for example:

```
            var x = new XMLHttpRequest();
            x.onreadystatechange = function() {
                  [See the following paragraphs describing functionality to unpack the
                  BLOB at the client]
            }
            x.open("GET", name, true);
            x.responseType = "blob";
            x.send();
```

Here, an XMLHttpRequest is created and assigned to a variable (e.g., x). The onreadystatechange() function of the object defines the actions that are taken after the response to the request has arrived (as discussed in the following paragraph). Next, a GET request is opened to the server using the XMLHttpRequest object stored in variable x. The response type is set to BLOB in order to request a BLOB response from the server. Finally, the request is sent.

The BLOB is then unpacked at the client, for example using:

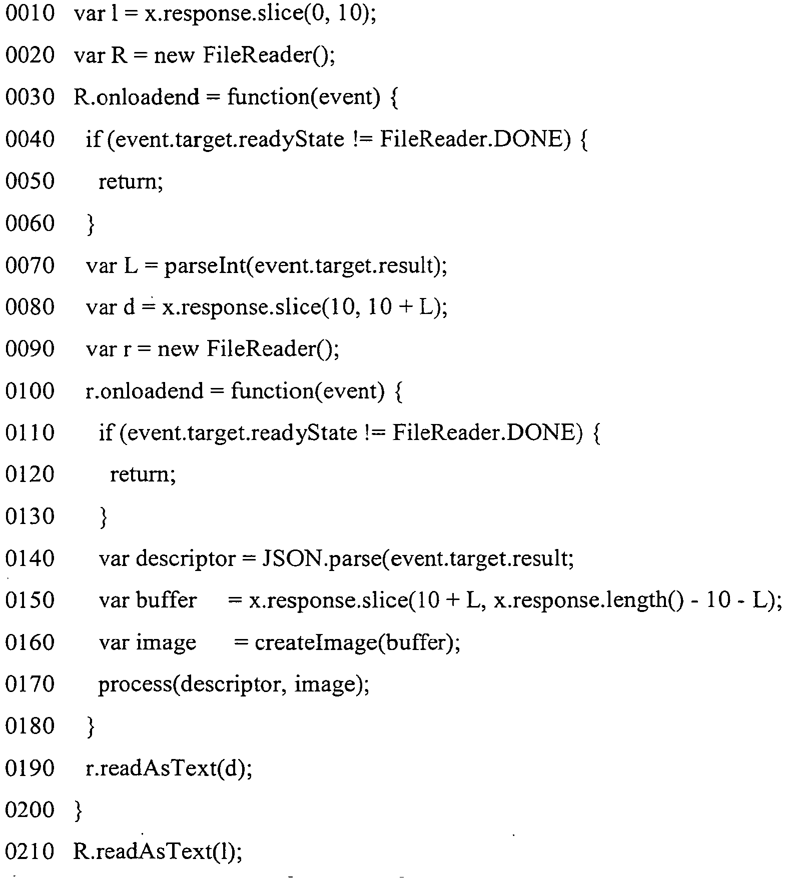

In this implementation, the unpacking is executed in the onreadystatechanged() function. When this function is executed, the property response of the object "x" contains the server response as a BLOB. In line 0010, the first 10 characters of the BLOB are extracted using the splice function and assigned to variable "1." Variable 1 now contains a BLOB that consists of the first 10 characters, which contain the descriptor length as a string. In JAVASCRIPT a FileReader object is required to extract a string from a BLOB. This FileReader object "R" is created in line 0020, its onloaded() function is defined and assigned in lines 0030 to 0200, and the processing of BLOB 1 is triggered in line 0210. When the FileReader R is executed, it calls the onloaded() function at various stages. The progress of the execution is tracked by the value of expression event.target.readyState. The processing has completed and the result of R is available only when the expression event.target.readyState yields the value FileReader.DONE. This is tested in line 0040, and the execution of onloaded() is terminated while this condition is not satisfied.

When the processing of R has completed, event.target.result contains the UI descriptor length as a string. This string is converted into an integer in line 0070. The descriptor length is then used in line 0080 to extract the descriptor from the BLOB response into variable "d." Now, the UI descriptor needs to be converted from a BLOB to a string. This happens in lines 0090 to 0190 analogously to the processing of the UI descriptor length using FileReader r. The onloaded() function of r, however, receives the UI descriptor. Assuming that the UI descriptor is a JSON file, it can be parsed into a JAVASCRIPT object using the JSON.parse() function, as shown in line 0140. Finally, the BLOB for the image can be spliced into variable buffer (e.g., see line 150).

The BLOB is then converted into an actual image by calling function createImage(), for example:

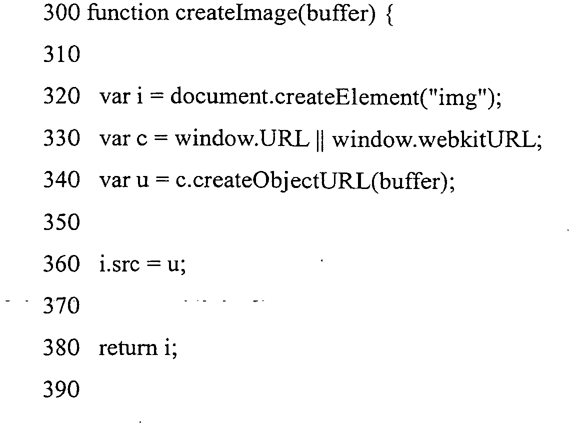

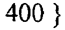

In typical implementations, function createlmage() uses the default approach to convert a binary file loaded by the browser into an HTML IMG element: The IMG element is created dynamically at line 0320, the object required for the conversion is selected in a browser-independent fashion at line 0330, and the contents of the transferred file are converted by a call to function createObjectURL() at line 0340. When the URL created in line 330 is assigned to the IMG element, the actual conversion takes place.

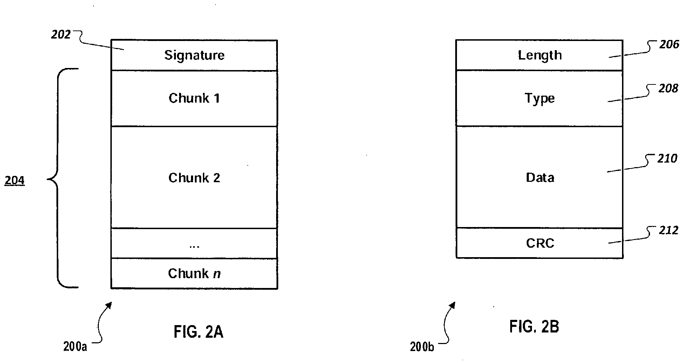

In a third option, in some implementations, an image format can be extended with a section for the above-described UI descriptor. For example, FIG. 2A illustrates an example image format extended with a signature section to hold described UI descriptor, according to an implementation. While the following example describes the use of the PNG image format, as will be understood by those of ordinary skill in the art, other image types can be used and described hardware/software adapted accordingly to support other image types.

For example, a PNG is an extensible file format for a lossless, portable, well-compressed storage of raster images. Indexed-color, grayscale, and true-color images are supported, plus an optional alpha channel. Sample depths range from 1 to 16 bits. As illustrated in FIG. 2A, a PNG file consists of a signature 202 and a sequence of data chunks 1-n 204. In typical implementations, the signature 202 is a byte string identifying a PNG file, while the data chunks 204 contain the actual information, such as pixel data, color palette data, additional data, etc.

Turning now to FIG. 2B, FIG. 2B illustrates an example structure for a data chunk as described in FIG. 2A, according to an implementation. In typical implementations, a PNG data chunk is structured with a length field 206 contains the length of the data block field 210, type field 208 defining the overall type of the applicable data chunk (e.g., image header, palette table, image data chunks, image trailer, etc.), data block field 210 holding data bytes appropriate to the defined data chunk type, and CRC field 212 used as a check value designed to detect network transmission errors.

Here, an additional data chunk type is defined, such as "iNTr" (for "interaction") containing information on the interaction behavior of the image. More precisely speaking, the data block field 210 of a data chunk of type iNTr contains the UI descriptor of the image. In some implementations, the UI descriptor data can be stored as a JSON string as illustrated in the above-provided UI descriptor example or as a more compact binary format. Further, the optimizations described above can also be applied.

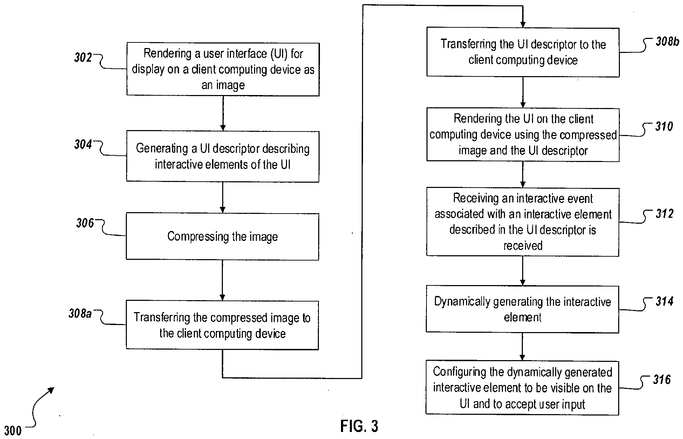

FIG. 3 is a flow chart of an example method 300 for optimizing software application user interface performance, according to an implementation. For clarity of presentation, the description that follows generally describes method 300 in the context of FIGS. 1A-1B, 2A-2B, 4, and 5. However, it will be understood that method 300 may be performed, for example, by any suitable system, environment, software, and hardware, or a combination of systems, environments, software, and hardware as appropriate. In some implementations, various steps of method 300 can be run in parallel, in combination, in loops, and/or in any order; including within a cloud-computing environment.

At 302, a user interface (UI) is rendered by a server for display on a client computing device as, for example, as a bitmap image. In other implementations, other image formats can be used other than or in conjunction with bitmap images. From 302, method 300 proceeds to 304.

At 304, a UI descriptor describing interactive elements of the UI is generated by the server. From 304, method 300 proceeds to 306.

At 306, the rendered bitmap image is compressed by the server. In some implementations, the compressed image can be in a lossless image format (e.g., a PNG or other lossless image format). From 306, method 300 proceeds to 308a.

At 308a, the compressed image is transferred to a client computing device for rendering. In typical implementations, the compressed image is sent as a separate message. From 308a, method 300 proceeds to 308b.

At 308b, the UI descriptor is transferred to a client computing device for rendering. In typical implementations, the UI descriptor is sent as a separate message. In some implementations, the separate messages of 308a and 308b are sent either sequentially or in parallel. From 308b, method 300 proceeds to 310.

At 310, the UI is rendered by the client computing device as an interactive UI using the received compressed image and UI descriptor. The client computing device proceeds according to the following methodology:
1. The client creates an image map by:
   a. Iterating over the elements of the "area" array property contained in the UI descriptor to create the interactive areas for the image map.
   b. Creating a MAP HTML element for the image map.
2. Making the image map visible on the client.
From 310, method 300 proceeds to 312.

At 312, an interactive event associated with an interactive element described in the UI is received. From 312, method 300 proceeds to 314.

At 314, the interactive element is dynamically generated. From 314, method 300 proceeds to 316.

At 316, the dynamically generated interactive element is configured to be visible on the UI and to accept user input. Note that while the example of FIG. 3 describes creating an input field on-the-fly and making it visible, in this and other implementations, other UI elements can be, for example, added, removed, changed, resized, and other functionality. For example, a pop-up dialog can be generated or a drop-down list of a drop-down list box can be shown (or hidden after a user selects a value). In other words, any change that can happen on a GUI can be supported by the described subject matter. After 316, method 300 stops.

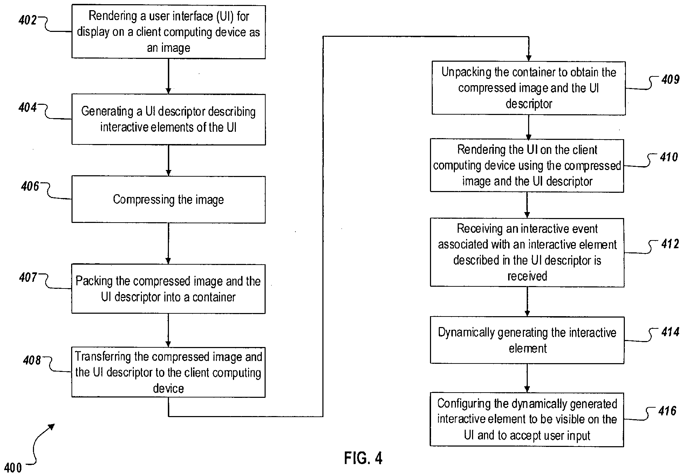

FIG. 4 is a flow chart of an enhanced method for optimizing software application user interface performance, according to an implementation. For clarity of presentation, the description that follows generally describes method 400 in the context of FIGS. 1A-1B, 2A-2B, 3, and 5. However, it will be understood that method 400 may be performed, for example, by any suitable system, environment, software, and hardware, or a combination of systems, environments, software, and hardware as appropriate. In some implementations, various steps of method 400 can be run in parallel, in combination, in loops, and/or in any order; including within a cloud-computing environment.

At 402, a user interface (UI) is rendered by a server for display on a client computing device as, for example, as a bitmap image. In other implementations, other image formats can be used other than or in conjunction with bitmap images. From 402, method 400 proceeds to 404.

At 404, a UI descriptor describing interactive elements of the UI is generated by the server. From 404, method 400 proceeds to 406.

At 406, the rendered bitmap image is compressed by the server. In some implementations, the compressed image can be in a lossless image format (e.g., a PNG or other lossless image format). From 406, method 400 proceeds to 407.

At 407, the compressed image and UI descriptor is packed into a container, for example a custom defined MIME type, Binary Large Object (BLOB), an extended image format, or other container. From 407, method 400 proceeds to 408.

At 408, the compressed image and the UI descriptor are transferred in the container as part of a single message to a client computing device for rendering. From 408, method 400 proceeds to 409.

At 409, the transferred container is unpacked into the separate compressed image and UI descriptor. From 409, method 400 proceeds to 410.

At 410, the UI is rendered by the client computing device as an interactive UI using the unpacked compressed image and UI descriptor. The client computing device proceeds according to the following methodology:
1. The client creates an image map by:
   a. Iterating over the elements of the "area" array property contained in the UI descriptor to create the interactive areas for the image map.
   c. Creating a MAP HTML element for the image map.
2. Making the image map visible on the client.
From 410, method 400 proceeds to 412.

At 412, an interactive event associated with an interactive element described in the UI is received. From 412, method 400 proceeds to 414.

At 414, the interactive element is dynamically generated. From 414, method 400 proceeds to 416.

At 416, the dynamically generated interactive element is configured to be visible on the UI and to accept user input. Note that while the example of FIG. 4 describes creating an input field on-the-fly and making it visible, in this and other implementations, other UI elements can be, for example, added, removed, changed, resized, and other functionality. For example, a pop-up dialog can be generated or a drop-down list of a drop-down list box can be shown (or hidden after a user selects a value). In other words, any change that can happen on a GUI can be supported by the described subject matter. After 416, method 400 stops.

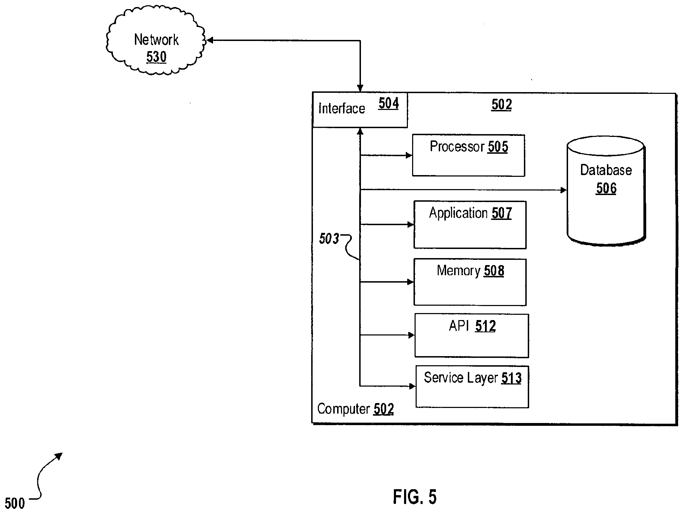

FIG. 5 is a block diagram of an exemplary computer used for implementing the described subject matter, according to an implementation. The illustrated computer 502 is intended to encompass any computing device such as a server, desktop computer, laptop/notebook computer, wireless data port, smart phone, personal data assistant (PDA), tablet computing device, one or more processors within these devices, or any other suitable processing device, including both physical and/or virtual instances of the computing device. Additionally, the computer 502 may comprise a computer that includes an input device, such as a keypad, keyboard, touch screen, or other device that can accept user information, and an output device that conveys information associated with the operation of the computer 502, including digital data, visual and/or audio information, or a GUI.

The computer 502 can process for/serve as a client (e.g., client 102 or one or more subcomponents), a server (e.g., server 108 or one or more subcomponents), and/or any other component of the described exemplary hardware/software architecture (whether or not illustrated). The illustrated computer 502 is communicably coupled with a network 530 (e.g., network 130).

At a high level, the computer 502 is an electronic computing device operable to receive, transmit, process, store, or manage data and information. According to some implementations, one or more components of the computer 502 may be configured to operate within a cloud-computing-based environment and the computer 502 may also include or be communicably coupled with a cloud-computing server, application server, e-mail server, web server, caching server, streaming data server, business intelligence (BI) server, and/or other server.

The computer 502 can generate requests to transmit over network 530 (e.g., as a client 102) or receive requests (e.g., as a server 108) over network 530 from a client application (e.g., a web browser or other application) and responding to the received requests by processing the said requests in an appropriate software application, hardware, etc. In addition, requests may also be sent to the computer 502 from internal users (e.g., from a command console or by other appropriate access method), external or third-parties; other automated applications, as well as any other appropriate entities, individuals, systems, or computers.

Each of the components of the computer 502 can communicate using a system bus 503. In some implementations, any and/or all the components of the computer 502, both hardware and/or software, may interface with each other and/or the interface 504 over the system bus 503 using an API 512 and/or a service layer 513. The API 512 may include specifications for routines, data structures, and object classes. The API 512 may be either computer-language independent or dependent and refer to a complete interface, a single function, or even a set of APIs. The service layer 513 provides software services to the computer 502 and/or the described exemplary hardware/software architecture. The functionality of the computer 502 may be accessible for all service consumers using this service layer. Software services, such as those provided by the service layer 513, provide reusable, defined business functionalities through a defined interface. For example, the interface may be software written in JAVA, C++, or other suitable language providing data in extensible markup language (XML) format or other suitable format. While illustrated as an integrated component of the computer 502, alternative implementations may illustrate the API 512 and/or the service layer 513 as stand-alone components in relation to other components of the computer 502 and/or the described exemplary hardware/software architecture. Moreover, any or all parts of the API 512 and/or the service layer 513 may be implemented as child or sub-modules of another software module, enterprise application, or hardware module without departing from the scope of this disclosure.

The computer 502 includes an interface 504. Although illustrated as a single interface 504 in FIG. 5, two or more interfaces 504 may be used according to particular needs, desires, or particular implementations of the computer 502 and/or the described exemplary hardware/software architecture. The interface 504 is used by the computer 502 for communicating with other systems in a distributed environment - including within the described exemplary hardware/software architecture - connected to the network 530 (whether illustrated or not). Generally, the interface 504 comprises logic encoded in software and/or hardware in a suitable combination and operable to communicate with the network 530. More specifically, the interface 504 may comprise software supporting one or more communication protocols associated with communications such that the network 530 or interface's hardware is operable to communicate physical signals within and outside of the illustrated exemplary hardware/software architecture.

The computer 502 includes a processor 505. Although illustrated as a single processor 505 in FIG. 5, two or more processors may be used according to particular needs, desires, or particular implementations of the computer 502 and/or the described exemplary hardware/software architecture. Generally, the processor 505 executes instructions and manipulates data to perform the operations of the computer 502. Specifically, the processor 505 executes the functionality required for optimizing software application user interface performance.

The computer 502 also includes a database 506 and memory 508 that hold data for the computer 502 and/or other components of the described exemplary hardware/software architecture. Although illustrated as a single database 506 and memory 508 in FIG. 5, two or more databases 508 and memories 508 may be used according to particular needs, desires, or particular implementations of the computer 502 and/or the described exemplary hardware/software architecture. While database 508 and memory 508 are illustrated as integral components of the computer 502, in alternative implementations, the database 506 and memory 508 can be external to the computer 502 and/or the described exemplary hardware/software architecture. In some implementations, the database can be a conventional database or an in-memory database, or a mix of both. In some implementations, the database 506 and memory 508 can be combined into one component.

The application 507 is an algorithmic software engine providing functionality according to particular needs, desires, or particular implementations of the computer 502 and/or the described exemplary hardware/software architecture, particularly with respect to functionalities required for optimizing software application user interface performance. For example, application 507 can serve as a client 102, framework 106, DOM 104, server 108, application 110, rendering engine 112, view 118/controller 120 (as either executing on the client or server), and/or any other component of the described exemplary hardware/software architecture (whether or not illustrated). Further, although illustrated as a single application 507, the application 507 may be implemented as multiple applications 507 on the computer 502. In addition, although illustrated as integral to the computer 502, in alternative implementations, the application 507 can be external to the computer 502 and/or the described exemplary hardware/software architecture.

There may be any number of computers 502 associated with, or external to, the described exemplary hardware/software architecture and communicating over network 530. Further, the term "client," "user," and other appropriate terminology may be used interchangeably as appropriate without departing from the scope of this disclosure. Moreover, this disclosure contemplates that many users may use one computer 502, or that one user may use multiple computers 502.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application-specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a read-only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer-readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), LED (Light Emitting Diode), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and/or parallel processing may be advantageous and performed as deemed appropriate.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

## Claims

1. A computer-implemented method (400), comprising the steps:
rendering (402), by a server, a user interface, UI, for display on a client computing device (102) as an image;
generating (404), by the server, a UI descriptor describing interactive elements of the UI;
compressing (406) the image into a compressed image in a compressed image format;
packing (407) the compressed image and the UI descriptor into a container;
transferring (408) the compressed image and the UI descriptor to the client computing device;
unpacking (409) the container to obtain the compressed image and the UI descriptor;
rendering (410), by the client computing device, the UI using the unpacked compressed image and UI descriptor, comprising
creating an image map by the client by:
iterating over the elements contained in the UI descriptor to create interactive areas for the image map; and
creating a MAP HTML element for the image map;
making the image map visible on the client;
receiving (412), at the client, an interactive event associated with an interactive element described in the UI descriptor;
in response to the interactive event:
dynamically generating (414), by the client, an interactive HTML element corresponding to the interactive element described in the UI descriptor;
assigning, by the client, a value to the interactive HTML element;
positioning, by the client, the interactive HTML element on the UI; and
configuring (416), by the client, the dynamically generated interactive HTML element to be visible on the UI and to accept input by appending the interactive HTML element to the document object model of the client such that the interactive HTML element replaces the corresponding interactive element of the UI described in the UI descriptor.

2. The method of any one of claims 1, wherein the image is a bitmap image and the compressed image format is PNG.

3. The method of claim 3, wherein the container is one of a customer MIME type, a binary large object (BLOB), or an extended image format.

4. A non-transitory, computer-readable medium storing computer-readable instructions, the instructions executable by a computer system (102, 108) which comprises a client and a server and configured to perform the method steps of any one of claims 1 to 3.

5. A computer system, comprising:
a client and a server;
a computer memory (508);
a hardware processor (505) interoperably coupled with the computer memory (508) and wherein the computer system is configured to perform the method steps of any one of claims 1 to 3.

## Patentansprüche

1. Computerimplementiertes Verfahren (400), umfassend die Schritte:
Bereitstellen (402), durch einen Server, einer Benutzerschnittstelle, UI, zum Anzeigen auf einer Client-Rechenvorrichtung (102) als ein Bild;
Erzeugen (404), durch den Server, eines Ul-Deskriptors, der interaktive Elemente der UI beschreibt;
Komprimieren (406) des Bilds zu einem komprimierten Bild in einem komprimierten Bildformat;
Packen des (407) des komprimierten Bilds und des Ul-Deskriptors in einen Container;
Überführen (408) des komprimierten Bilds und des Ul-Deskriptors zu der Client-Rechenvorrichtung;
Entpacken (409) des Containers zum Erhalten des komprimierten Bilds und des UI-Deskriptors;
Bereitstellen (410), durch die Client-Rechenvorrichtung, der UI unter Verwendung des entpackten komprimierten Bilds und des Ul-Deskriptors, umfassend
das Erzeugen einer Bild-Zuordnungstabelle ("image map") durch den Client durch:
Iterieren über die Elemente, die in dem Ul-Deskriptor enthalten sind, zum Erzeugen von interaktiven Bereichen für die Bild-Zuordnungstabelle; und
Erzeugen eines MAP-HTML-Elements für die Bild-Zuordnungstabelle;
Sichtbarmachen der Bild-Zuordnungstabelle auf dem Client;
Empfangen (412), bei dem Client, eines interaktiven Ereignisses, das mit einem interaktiven Element zusammenhängt, das in dem Ul-Deskriptor beschrieben ist;
als Reaktion auf das interaktive Ereignis:
dynamisches Erzeugen (414), durch den Client, eines interaktiven HTML-Elements, das dem interaktiven Element entspricht, das in dem Ul-Deskriptor beschrieben ist;
Zuordnen, durch den Client, eines Werts zu dem interaktiven HTML-Element;
Positionieren, durch den Client, des interaktiven HTML-Elements auf der UI; und
Konfigurieren (416), durch den Client, des dynamisch erzeugten interaktiven HTML-Elements, so dass es auf der UI sichtbar ist, und zum Annehmen einer Eingabe durch Anhängen des interaktiven HTML-Elements an das Dokumentenobjektmodell des Client, so dass das interaktive HTML-Element das entsprechende interaktive Element der UI, das in dem Ul-Deskriptor beschrieben ist, ersetzt.

2. Verfahren nach einem der Ansprüche 1, wobei das Bild ein Bitmap-Bild ist und das komprimierte Bildformat PNG ist.

3. Verfahren nach Anspruch 3, wobei der Container ein Container vom Kunden-MIME-Typ, ein binäres großes Objekt (BLOB) oder ein erweitertes Bildformat ist.

4. Nicht-flüchtiges, computerlesbares Medium, das computerlesbare Anweisungen speichert, wobei die Anweisungen durch ein Computersystem (102, 108) ausführbar sind, das einen Client und einen Server umfasst und zum Durchführen der Verfahrensschritte nach einem der Ansprüche 1 bis 3 ausgebildet ist.

5. Computersystem, umfassend:
einen Client und einen Server;
einen Computerspeicher (508);
einen Hardwareprozessor (505), der dialogfähig mit dem Computerspeicher (508) gekoppelt ist und wobei das Computersystem zum Durchführen der Verfahrensschritte nach einem der Ansprüche 1 bis 3 ausgebildet ist.

## Revendications

1. Procédé mis en oeuvre par ordinateur (400), comprenant les étapes :
rendre (402), par un serveur, une interface utilisateur, UI, pour l'affichage sur un dispositif informatique client (102) en tant qu'image ;
générer (404), par le serveur, un descripteur d'UI décrivant des éléments interactifs de l'UI ;
compresser (406) l'image en une image compressée dans un format d'image compressée ;
emballer (407) l'image compressée et le descripteur d'UI dans un conteneur ;
transférer (408) l'image compressée et le descripteur d'UI au dispositif informatique client ;
déballer (409) le conteneur pour obtenir l'image compressée et le descripteur d'UI ;
rendre (410), par le dispositif informatique client, l'UI en utilisant l'image compressée et le descripteur d'UI déballés, comprenant
créer une carte d'image par le client en :
itérant sur les éléments contenus dans le descripteur d'UI pour créer des zones interactives pour la carte d'image ; et
créant un élément HTMI, MAP pour la carte d'image ;
rendant la carte d'image visible sur le client ;
recevoir (412), au niveau du client, un événement interactif associé à un élément interactif décrit dans le descripteur d'UI ;
en réponse à l'événement interactif :
générer dynamiquement (414), par le client, un élément HTML interactif correspondant à l'élément interactif décrit dans le descripteur d'UI ;
attribuer, par le client, une valeur à l'élément HTML interactif ;
positionner, par le client, l'élément HTML interactif sur l'UI ; et
configurer (416), par le client, l'élément HTML interactif généré dynamiquement pour être visible sur l'UI et pour accepter une entrée en annexant l'élément HTML interactif au modèle d'objet de document du client de sorte que l'élément HTML interactif remplace l'élément interactif correspondant de l'UI décrit dans le descripteur d'UI.

2. Procédé selon l'une quelconque des revendications 1, dans lequel l'image est une image bitmap et le format d'image compressée est PNG.

3. Procédé selon la revendication 3, dans lequel le conteneur est un d'un type MIME client, d'un gros objet binaire (BLOB) ou d'un format d'image étendu.

4. Support non transitoire lisible par ordinateur stockant des instructions lisibles par ordinateur, les instructions étant exécutables par un système informatique (102, 108) qui comprend un client et un serveur, et configurées pour réaliser les étapes de procédé selon l'une quelconque des revendications 1 à 3.

5. Système informatique, comprenant :
un client et un serveur ;
une mémoire informatique (508) ;
un processeur (505) couplé de manière interopérable avec la mémoire informatique (508) et dans lequel le système informatique est configuré pour réaliser les étapes de procédé selon l'une quelconque des revendications 1 à 3.
